# EUROPEAN PATENT APPLICATION

(11) **EP 4 814 865 A1**
(43) Date of publication of application: **30.09.2026**
(21) Application number: 25305452.2
(22) Date of filing: 27.03.2025
(51) Int. Cl.: G06T 7/00

(54) **A COMPUTER-IMPLEMENTED METHOD FOR ESTIMATING THE BODY COMPOSITION OF A PATIENT FROM A RESTRICTED-FIELD-OF-VIEW MEDICAL IMAGE**

(71) Applicant: Guerbet, 93420 Villepinte (FR)
(72) Inventor: Bône, Alexandre, 75009 PARIS (FR)
(74) Representative: Plasseraud IP

(57) **Abstract**

The present document involves a computer-implemented method for estimating the body composition of a patient from a restricted-field-of-view medical image, the method comprising:
- segmenting (S1) tissues present in the restricted-field-of-view medical image to identify at least one class of tissue;
- computing (S2) a topogram representing the distribution of segmented tissue areas as a function of their longitudinal position along the body of the patient, for said class;
- registering (S3) the topogram with a reference database of full-body medical images from reference patients, said registration step comprising aligning the topogram with the topograms of reference patients by maximizing a similarity criterion;
- selecting (S4) a subset of reference patients by identifying those with a similarity score above a predefined threshold;
- determining (S5), for each class of tissue, personalized extrapolation factors by computing the volumetric ratio between restricted-field-of-view volume measurements and full-body volume measurements for the selected reference patients;
- estimating (S6) the body composition of the patient by multiplying, for each class of tissue, the measured volumes of the segmented tissue in the restricted-field-of-view image by the personalized extrapolation factors.

## Description

### Technical Field

The present disclosure related to a computer-implemented method for estimating the body composition of a patient from a restricted-field-of-view medical image.

### Background Art

In the field of medical imaging, computer vision techniques are employed to analyze and interpret medical images for various diagnostic and therapeutic purposes. These techniques involve the use of algorithms and models to process images obtained from modalities such as CT scans, MRI, and X-rays, enabling the identification and quantification of anatomical structures and pathological conditions. Applications of computer vision in medical imaging include tumor detection, organ segmentation, and body composition analysis, which may play a significant role in clinical decision-making and personalized treatment planning.

In the context of body composition analysis, the primary goal is to accurately estimate the distribution and volume of different tissue types, such as muscle and fat, within a patient's body. This information is important for assessing health conditions and tailoring medical interventions. Accurate body composition estimation can aid in the management of metabolic disorders, oncology treatment planning, and nutritional assessments, providing significant insights into a patient's overall health status.

A significant challenge in achieving accurate body composition estimation arises from the limitations of restricted-field-of-view (FoV) medical images, which do not capture the full body. For instance, CT scans of the thorax-abdomen-pelvis (TAP) region exclude the legs and head, leading to incomplete data for comprehensive body analysis. This partial imaging necessitates the use of extrapolation techniques to estimate total body composition, which can introduce errors if not tailored to individual patient morphology.

The reference https://pubmed.ncbi.nlm.nih.gov/15310748/ offers a workaround that is commonly used in clinical practice: the total skeletal muscle and fat tissue volumes are estimated from a single abdominal cross-sectional image.

Decazes, P., Tonnelet, D., Vera, P. et al. Anthropometer3D: Automatic Multi-Slice Segmentation Software for the Measurement of Anthropometric Parameters from CT of PET/CT. J Digit Imaging 32, 241-250 (2019) describes an image processing method for estimating body composition from restricted-field-of-view CT scans. The method relies on pre-computed extrapolation factors, such as 1.92 for muscle and 1.44 for fat, which are derived from population averages. However, these factors are not adapted to the specific morphology of individual patients, leading to potential inaccuracies in body composition estimation.

Another reference, Decazes, P.; Ammari, S.; De Prévia, A.; Mottay, L.; Lawrance, L.; Belkouchi, Y.; Benatsou, B.; Albiges, L.; Balleyguier, C.; Vera, P.; et al. Body Composition to Define Prognosis of Cancers Treated by Anti-Angiogenic Drugs. Diagnostics 2023, 13, 205, highlights the use of body composition as a biomarker in oncology. While this underscores the importance of accurate body composition analysis, the study does not address the limitations of using fixed extrapolation factors for individual patients, which can result in suboptimal assessments.

The specific problem addressed by the described solution is the inadequacy of current methods that use fixed, population-average extrapolation factors for estimating body composition from restricted-field-of-view medical images. These methods fail to account for individual variations in body morphology, leading to potential inaccuracies in the estimation of muscle and fat distribution. The described solution seeks to overcome these limitations by developing a method to compute patient-specific extrapolation factors, thereby enhancing the precision and reliability of body composition analysis.

### Summary

To that aim, the present document proposes a computer-implemented method for estimating the body composition of a patient from a restricted-field-of-view medical image, the method comprising:
- segmenting tissues present in the restricted-field-of-view medical image to identify at least one class of tissue;
- computing a topogram representing the distribution of segmented tissue areas as a function of their longitudinal position along the body of the patient, for said class;
- registering the topogram with a reference database of full-body medical images from reference patients, said registration step comprising aligning the topogram with the topograms of reference patients by maximizing a similarity criterion;
- selecting a subset of reference patients by identifying those with a similarity score above a predefined threshold;
- determining, for each class of tissue, personalized extrapolation factors by computing the volumetric ratio between restricted-field-of-view volume measurements and full-body volume measurements for the selected reference patients;
- estimating the body composition of the patient by multiplying, for each class of tissue, the measured volumes of the segmented tissue in the restricted-field-of-view image by the personalized extrapolation factors.

In the context of the present invention, it should be understood that the terms "a," "an," and "at least one" are used interchangeably unless otherwise specified. Specifically, the use of the term "a" or "an" does not limit the invention to a single element but should be interpreted as including the possibility of multiple elements, unless clearly indicated otherwise. Therefore, the term "at least one" also encompasses the situation where only one element is present.

A **medical image** may be defined as a visual representation of internal body structures or functions acquired using various imaging modalities. These images are generated using hardware and software systems that capture and process data, producing two-dimensional (2D) or three-dimensional (3D) images that aid in the diagnosis, treatment planning, and monitoring of various medical conditions. Medical images typically contain information about tissue density, composition, and function and are interpreted by radiologists, physicians, or other medical professionals with specialized training in image analysis. Such image is produced using modalities such as Computed Tomography (CT), Magnetic Resonance Imaging (MRI), and Positron Emission Tomography (PET), among others.

**Restricted-field-of-view** refers to a limitation in the scope or area that can be captured or observed by an imaging system, such as a medical imaging device. In the context of medical imaging, it means that the image obtained does not encompass the entire body or area of interest, but rather a specific, limited section, such as the thorax-abdomen-pelvis region in a CT scan. This restriction can pose challenges for comprehensive analysis, as it requires extrapolation techniques to estimate information about the unobserved areas.

**Body composition** refers to the proportion and spatial distribution of different components that make up a person's body, primarily including muscle, fat or bone. It is an important metric in health assessments, as it provides insights into an individual's physical condition and potential health risks.

**Segmenting** refers to the process of partitioning a digital image into multiple segments or regions to simplify its representation and make it more meaningful for analysis. This process involves identifying and delineating anatomical structures, such as organs or lesions, within the image, often using algorithms or deep learning techniques like U-net, to generate segmentation maps that highlight specific areas of interest for further clinical evaluation or treatment planning.

A **class of tissue** refers to a specific category or type of biological tissue that is identified and analyzed within an image. Common classes of tissue include muscle tissue, subcutaneous fat, and visceral fat, each of which has distinct characteristics and functions within the body. These classes may be segmented and quantified in medical images to assess body composition and health status.

The term topogram herein refers to a 1D topogram and is a structured representation of tissue distribution along the longitudinal axis of a patient's body, derived from segmented medical images. It is generated by quantifying the total area occupied by each tissue type in cross-sectional slices of a restricted-field-of-view medical image and mapping these areas to their corresponding anatomical positions. The topogram serves as a longitudinal profile that captures how the cross-sectional distribution of each tissue type varies along the scanned portion of the body, facilitating comparisons and further analysis in medical imaging applications.

The **distribution of segmented tissue areas** refers to the spatial arrangement and quantification of different tissue types within a given area or volume of the body as captured by an imaging modality.

The **longitudinal position** refers to a location or point along the lengthwise axis of a body. In the context of medical imaging, it typically describes the position along the vertical axis of the body, from head to toe, used to map or analyze anatomical structures or tissue distributions in a sequential manner. The longitudinal axis of a human body is commonly referred to as the cranio-caudal axis. This axis runs vertically from the head (cranial) to the tail or feet (caudal).

**Registering** refers to the process of aligning or matching different images or datasets or curves to a common coordinate system. This involves transforming the images so that corresponding anatomical structures or features are accurately overlaid, allowing for comparative analysis or integration of data from different sources. Registration is useful for tasks such as comparing patient images over time, integrating data from different imaging modalities, or aligning patient-specific data with reference datasets.

A **reference database** in the present context of medical imaging and body composition estimation is a collection of full-body medical images from a population of reference patients. This database is used to provide baseline data for comparison and extrapolation.

**Aligning** refers to the process of adjusting or arranging elements in a particular order or position to achieve a desired configuration or orientation. In the context of image processing or computer vision, aligning often involves transforming an image or dataset so that it matches or corresponds with another reference image or dataset, typically by using techniques such as translation, rotation, or scaling to maximize similarity or correspondence between the two.

A **similarity criterion** is a quantitative measure used to assess the degree of resemblance or correspondence between two sets of data, such as images, signals, or patterns. In the context of medical imaging or computer vision, it often involves statistical metrics like the Jaccard index, correlation coefficients, or least-square differences to evaluate how closely two datasets align or match.

**Personalized extrapolation factors** are patient-specific scaling coefficients used to estimate total body composition from partial imaging data, such as restricted-field-of-view medical images. These factors are derived by comparing the volumetric measurements of tissue types within the restricted field of view to those from full-body measurements of morphologically similar reference patients. By tailoring the extrapolation to individual anatomical characteristics, personalized extrapolation factors enhance the accuracy of body composition estimation compared to using fixed, population-average factors.

A **volumetric ratio** is a quantitative measure that compares the volume of one substance or component to another, often expressed as a fraction or proportion. In the context of medical imaging or body composition analysis, it typically refers to the ratio of the volume of a specific tissue type within a restricted field of view to its corresponding volume in a full-body scan, allowing for extrapolation and estimation of total body composition.

The above-mentioned method introduces a new approach to estimating body composition from restricted-field-of-view medical images by incorporating patient-specific extrapolation factors. This approach addresses the limitations of traditional methods that rely on fixed, population-average extrapolation factors, which do not account for individual variations in body morphology. By segmenting tissues in the restricted-field-of-view image and computing a topogram, the method captures the distribution of tissue areas along the patient's body. The registration of this topogram with a reference database of full-body images allows for the identification of reference patients with similar morphological characteristics. This step enables the determination of personalized extrapolation factors by comparing volumetric measurements from restricted and full-body images of these reference patients. As a result, the method provides a more accurate estimation of body composition by tailoring the extrapolation process to the specific anatomical features of the patient, thereby enhancing the precision and reliability of the analysis. This personalized approach is particularly beneficial in clinical settings where accurate body composition assessments are important for diagnosis and treatment planning.

Said class of tissue may comprise at least one of muscle tissue, subcutaneous fat, and visceral fat.

Segmenting tissues may be performed using a deep learning model selected from the group consisting of U-Net (e.g., nnU-Net), V-Net, and other convolutional neural network (CNN) architectures optimized for medical image segmentation. Suitable models may include MOOSE (https://github.com/ENHANCE-PET/MOOSE) and TotalSegmentator (https://github.com/wasserth/TotalSegmentator), which provide pretrained models for whole-body and organ-specific segmentation. These models can be adapted and fine-tuned for specific anatomical structures or pathologies using transfer learning or domain-specific training dataset.

The segmenting tissues may be refined using post-processing techniques including morphological operations or connected component analysis.

Computing the topogram may include using interpolation methods to handle missing or unevenly spaced slices or implementing smoothing functions to reduce noise in the topogram.

The computed topogram may be normalized to facilitate alignment with reference topograms.

Registering the topogram may involve using a similarity criterion selected from the group consisting of the Jaccard index, correlation coefficients, and least-square differences.

Registering the topogram may involve applying translation and scaling transformations to optimize alignment with reference topograms.

Selecting a subset of reference patients may involve using dynamic thresholds for similarity scores based on validation studies or selecting a fixed percentage of reference patients with the highest similarity scores.

More particularly, the method may comprise at least part of the following successive steps: image acquisition, tissue segmentation, post-processing, topogram computation, normalization, topogram registration, reference patients selection, extrapolation factor determination, body composition estimation and output Generation.

### Image Acquisition

The process of image acquisition may involve obtaining a restricted-field-of-view medical image of the patient, which is typically captured using imaging modalities such as Computed Tomography (CT), Magnetic Resonance Imaging (MRI), or Positron Emission Tomography (PET). In this context, the image may be focused on a specific region of the body, such as the thorax-abdomen-pelvis area, rather than the entire body. This targeted imaging is often part of routine clinical procedures where full-body scans are not feasible or necessary.

The acquisition process should ensure that the image quality is sufficient for subsequent analysis, with adequate resolution and contrast to allow for accurate tissue segmentation. The input interface of the system may be designed to receive these medical images from various sources, ensuring compatibility with different imaging systems. It may support multiple data acquisition methods, including direct retrieval from hospital Picture Archiving and Communication Systems (PACS) through the Digital Imaging and Communications in Medicine (DICOM) standard. Additionally, medical images can be uploaded from local or network storage in standard formats such as NIfTI (.nii, .nii.gz) or DICOM (.dcm).

The input interface may also support real-time streaming of imaging data from connected imaging devices, facilitating the acquisition of the necessary images for body composition estimation.

### Tissue Segmentation

The segmentation of tissues in the restricted-field-of-view (FoV) medical image may involve automatically identifying and classifying different types of tissues present in the medical image, such as muscle, subcutaneous fat, and visceral fat. The segmentation process can typically be performed using a pre-trained deep learning model specialized in medical image analysis, such as a U-Net (for example using a nn-Unet), a V-Net, or other convolutional neural network (CNN) architectures.

The segmentation process may begin with pre-processing the input medical image to enhance and standardize its quality. This may involve normalization and contrast enhancement to improve tissue differentiation and reduce noise, ensuring that the segmentation model can accurately identify the various tissue types. The pre-processed image may then be fed into the segmentation model, which may have been trained on a dataset of annotated medical images where different tissue classes may have been manually labeled by experts.

The segmentation model may process the image and output a pixel-wise segmentation map, where each pixel may be assigned a label corresponding to a specific tissue type (e.g., muscle, subcutaneous fat, visceral fat). This map may effectively partition the image into distinct regions, each representing a different class of tissue.

### Post-Processing

The post-processing step aims to refine the segmentation results obtained from the initial segmentation model output. After the tissues in the restricted-field-of-view medical image have been segmented, the raw segmentation map may contain small artifacts or misclassified regions that can affect the accuracy of the body composition estimation. Post-processing techniques may be employed to address these issues and enhance the quality of the segmentation.

One proposed post-processing technique may be the use of morphological operations. These operations involve the application of mathematical morphology to the segmentation map to remove noise and small artifacts. Techniques such as erosion, dilation, opening, and closing can be used to refine the boundaries of segmented regions, ensuring that the tissue areas are accurately delineated. These operations help in smoothing the edges and filling small gaps within the segmented regions, leading to a cleaner and more precise segmentation map.

Another post-processing technique may be the use of connected component analysis. This method involves identifying and labeling connected regions within the segmentation map. By analyzing the connectivity of pixels or voxels, connected component analysis can help in distinguishing true tissue regions from isolated noise or misclassified areas. This technique may be particularly useful for removing small, spurious regions that do not correspond to actual tissue structures, thereby improving the overall accuracy of the segmentation.

### Topogram Computation

The step of computing a topogram may involve processing the segmented medical image to derive a structured representation of tissue distribution along the longitudinal axis of the patient's body. Once the medical image has undergone tissue segmentation, wherein each voxel or pixel is classified into a specific tissue type, the method may systematically analyze the segmented data across the longitudinal axis to construct a topogram.

For each cross-sectional slice of the restricted-field-of-view medical image, the total area occupied by each segmented tissue type, such as muscle, subcutaneous fat, and visceral fat, may be quantified. This quantification may be performed by summing the pixel or voxel counts corresponding to each tissue class and converting these counts into physical area measurements based on the known spatial resolution of the imaging modality. The computed tissue areas for each slice may then be mapped to their corresponding anatomical position along the longitudinal axis of the patient.

The topogram may be generated by aggregating these area measurements across all available slices, thereby producing a longitudinal profile that captures how the cross-sectional distribution of each tissue type varies along the scanned portion of the body. This representation enables a structured comparison of tissue distribution patterns across different patients, facilitating downstream processing such as registration with reference datasets. The topogram serves as a compact and informative descriptor of the segmented tissue distributions.

The topogram may also be generated by aggregating area measurement across specific slices chosen by the identification of anatomical landmarks, such as central slices for vertebrae. These anatomical landmarks may be identified with a dedicated segmentation method.

To ensure consistency and robustness in topogram computation, the method may incorporate additional processing techniques such as interpolation for missing or unevenly spaced slices, smoothing functions to reduce noise to facilitate alignment with reference topograms.

### Normalization

The computed topogram may then be normalized. Such normalization aims to prepare the computed topogram for alignment with reference topograms from a database of full-body medical images. After the topogram is generated, it may contain variations in scale, intensity, or orientation that could hinder accurate alignment with reference data. Normalization addresses these discrepancies by standardizing the topogram, ensuring that it is in a consistent format suitable for comparison and registration.

Normalization may involve adjusting the topogram's scale and intensity values to a common range. This process may also include rescaling the topogram to a standard size or resolution, ensuring that the anatomical features are represented consistently across different patients and imaging sessions.

### Topogram Registration

The step of registering the computed topogram with a reference database of full-body medical images involves aligning the patient-specific topogram with a set of pre-existing topograms derived from a population of reference patients. This registration process enables a comparative analysis by establishing correspondences between the restricted-field-of-view tissue distribution of the patient and the full-body tissue distributions found in the reference database. The goal of this registration is to maximize the similarity between the patient's topogram and those of reference patients, thereby identifying the most morphologically similar individuals.

To achieve this, the method may first retrieve a set of topograms from the reference database, where each reference topogram represents the longitudinal distribution of segmented tissue areas for a fully scanned patient. Since the patient-specific topogram is typically derived from a restricted field of view, a challenge is to determine the most appropriate alignment between the restricted data and the full-body reference curves. The registration process may involve translating and scaling the patient's topogram along the longitudinal axis to find an optimal match with the reference topograms.

### Reference Patients Selection

A similarity criterion may be defined to quantify the degree of correspondence between the patient's topogram and each reference topogram. This criterion may be based on statistical metrics such as the Jaccard index, correlation coefficients, or least-square differences, which measure the overlap and structural similarity between curves.

The Jaccard index, also known as the Jaccard similarity coefficient, is a statistical measure used to compare the similarity and diversity of sample sets. It is defined as the size of the intersection divided by the size of the union of the sample sets. In the case of 1D curves, the Jaccard may be applied to the surface area defined as the area under the curves. The Jaccard index ranges from 0 to 1, where 0 indicates no similarity and 1 indicates complete similarity between the sets.

Correlation coefficients are statistical measures that quantify the strength and direction of a linear relationship between two variables. They range from -1 to 1, where a value of 1 indicates a perfect positive linear relationship, -1 indicates a perfect negative linear relationship, and 0 indicates no linear relationship. Commonly used correlation coefficients include Pearson's correlation coefficient, which assesses linear relationships, and Spearman's rank correlation coefficient, which evaluates monotonic relationships.

Least-square differences refer to a statistical method used to measure the discrepancy between observed and predicted values. It involves calculating the sum of the squares of the differences between each observed value and its corresponding predicted value, with the goal of minimizing this sum to achieve the best fit for a model. This technique is commonly used in regression analysis to determine the line of best fit by minimizing the overall error between the data points and the regression line.

A predefined threshold may applied to the similarity criterion to identify the most relevant reference patients. This threshold may be expressed in absolute or relative terms with respect to the single most similar reference patient.

Only reference topograms that achieve a similarity criterion exceeding this threshold may be retained for further analysis. The threshold may be empirically determined based on validation studies or dynamically adjusted to ensure a sufficient number of reference patients are selected while maintaining a high level of morphological correspondence. In some implementations, a fixed percentage of the best-matching reference patients may be selected instead of applying an absolute threshold.

For example, the Jaccard index may be maximized between the moving and fixed topograms across all patients and all possible vertical co-alignments. The set of similar reference patients may be determined as those for which the optimal Jaccard index exceeds 90% of the global maximum observed across all patients.

The algorithm may iterate through different potential alignments, systematically shifting and rescaling the patient's topogram to identify the transformation that maximizes the similarity score. The optimal alignment ensures that the segmented tissue distribution in the restricted field of view is positioned in a manner that best matches the anatomical profile of a reference patient.

Once the best-matching reference topograms are identified based on their similarity scores, they may be selected for further analysis. These selected topograms serve as the basis for deriving patient-specific extrapolation factors, allowing for an accurate estimation of total body composition.

This selection process ensures that the subsequent extrapolation of body composition is based on individuals whose anatomical and tissue distribution characteristics closely match those of the patient, thereby improving the accuracy of the estimation.

By limiting the analysis to a subset of highly similar reference patients, the method avoids biases that could arise from population-wide averaging and instead provides a more personalized and more accurate estimation of body composition.

### Extrapolation Factor Determination

The step of determining personalized extrapolation factors may involve computing the volumetric ratio between restricted-field-of-view measurements and full-body measurements for the selected reference patients. This process aims to derive patient-specific scaling coefficients that enable the estimation of total body composition from partial imaging data. These extrapolation factors account for individual variations in anatomical proportions and tissue distribution, ensuring that the body composition estimation is tailored to the morphology of the patient rather than relying on generalized population-wide averages.

Once a subset of reference patients has been selected based on similarity scores, their corresponding full-body measurements may be retrieved from the reference database. For each selected reference patient, the total volume of each tissue type-such as muscle, subcutaneous fat, and visceral fat-may be computed by integrating the cross-sectional tissue areas along the entire length of the reference topogram. Similarly, the volumetric measurement of each tissue type may be calculated within the restricted field of view, corresponding to the anatomical region captured in the patient's medical image registered onto the reference tomogram using the previously-computed alignements.

The extrapolation factor for each tissue type may then be computed as the ratio between the full-body volume and the restricted-field-of-view volume for each selected reference patient. Mathematically, this ratio expresses how the tissue volume within the restricted imaging region relates to the total volume observed in individuals with similar morphological characteristics. Since multiple reference patients are selected, the extrapolation factors derived for each individual may be averaged to obtain a robust, patient-specific scaling factor that mitigates potential outlier effects.

These personalized extrapolation factors enable a more accurate estimation of the patient's total body composition by adjusting the measurements obtained from the restricted field of view to reflect the expected full-body distribution. Unlike traditional methods that apply fixed extrapolation coefficients derived from broad population studies, this approach ensures that the estimation accounts for individual variability in body shape, tissue proportions, and anatomical composition.

### Body Composition Estimation

The step of estimating the patient's body composition involves using the personalized extrapolation factors to compute an approximation of the total tissue composition, for example the total muscle and fat composition of the patient's body based on the localized measurements obtained from the medical image.

Once the tissue segmentation and volumetric analysis have been completed within the restricted field of view, the total volume of each tissue type-such as muscle, subcutaneous fat, and visceral fat-is obtained by integrating the cross-sectional areas over all slices contained in the scan. These restricted-field-of-view volumes represent only a partial measurement of the patient's overall tissue distribution, necessitating an extrapolation process to estimate the total body composition.

The personalized extrapolation factors, which were computed based on the volumetric ratios derived from similar reference patients, are then applied to these restricted-field-of-view volumes. For each tissue type, the measured volume within the restricted scan is multiplied by the corresponding extrapolation factor to yield an estimated total body volume. This multiplication process effectively scales the observed data in a manner that accounts for the expected proportions of tissue distribution in the unseen regions of the patient's body.

### Output Generation

The output generation step involves providing the estimated body composition information in a format that is useful for clinical interpretation and decision-making. After the body composition estimation process is complete, the results may be compiled into structured reports and visualizations that can aid healthcare professionals in diagnosing and planning treatment for patients.

The structured reports may summarize the estimated volumes of different tissue types, such as muscle, subcutaneous fat, and visceral fat, and highlight any significant deviations from normal ranges. These reports can be exported in standardized formats, such as DICOM SC (digital imaging and communications in medicine - secondary capture), HL7 CDA (Clinical Document Architecture) or FHIR (Fast Healthcare Interoperability Resources), to ensure seamless integration into electronic health record (EHR) systems. This integration facilitates the sharing and accessibility of body composition data across different healthcare platforms and providers.

To enhance visualization, the device may overlay segmentation maps and topogram results on the original medical images, displaying color-coded annotations that highlight tissue distribution. These visualizations can be presented within an interactive graphical interface, allowing clinicians to manually review and adjust body composition estimates, view similarity scores, and filter results based on confidence thresholds. This interactive capability provides clinicians with a comprehensive view of the patient's body composition, enabling more informed clinical decisions.

Additionally, the device may include a DICOM output module, allowing processed images and data to be sent back to a PACS system for further clinical evaluation. An application programming interface (API) may also be provided to facilitate interoperability with third-party medical imaging applications and AI-driven decision support systems, ensuring that the body composition estimation results can be effectively utilized in various clinical workflows and research applications.

The present document also relates to a computer program product, comprising instructions which, when executed by a processor, cause the processor to implement the method according to any of the preceding claims.

The present document also relates to a computer device comprising:
- an input interface to receive medical images,
- a memory for storing at least instructions of a computer program according to the present document,
- a processor accessing the memory for reading the aforesaid instructions and executing then the method according to the present document,
- an output interface to provide information concerning the estimated body composition of the patient.

Such computer device covers cloud-based deployment with for example a local graphic interface and remote computing capabilities.

The input interface may be responsible for receiving medical images from various sources, ensuring compatibility with different imaging systems. The interface may support multiple data acquisition methods, including direct retrieval from hospital Picture Archiving and Communication Systems (PACS) through the Digital Imaging and Communications in Medicine (DICOM) standard. Alternatively, medical images may be uploaded from local or network storage in standard formats such as NIfTI (.nii, .nii.gz) or DICOM (.dcm). The input interface may also support real-time streaming of imaging data from connected imaging devices such as CT, MRI, or PET scanners, facilitating the acquisition of restricted-field-of-view images necessary for body composition estimation.

The memory component may store the necessary instructions for executing the body composition estimation method and retain intermediate and final results. The memory may include both short-term and long-term storage capabilities. Random Access Memory (RAM) may be used for temporary storage of processed images, segmentation maps, topograms, similarity matrices, and extrapolation factors during execution. Persistent storage, such as solid-state drives (SSD) or hard disk drives (HDD), may be used to store the computer program instructions, pre-trained deep learning models, configuration files, and processed body composition data. A structured database may be incorporated to archive body composition results, enabling retrieval for longitudinal studies. If the device includes hardware acceleration for deep learning-based segmentation, such as Graphics Processing Units (GPU) or Tensor Processing Units (TPU), the memory module may include dedicated Video RAM (VRAM) optimized for high-performance parallel computation.

The processor executes the method for body composition estimation by accessing the memory, reading the program instructions, and performing computations on the medical images. It may be responsible for executing key processing steps, including deep learning-based segmentation, topogram computation, similarity matrix computation, and extrapolation factor determination. The processing unit may include a Central Processing Unit (CPU) to handle general computational tasks, while a Graphics Processing Unit (GPU) or specialized AI accelerator may be leveraged to enhance performance for deep learning-based segmentation using models such as U-Net or V-Net. Multi-core parallel processing capabilities may enable different stages of the method to run concurrently, improving efficiency. If deployed in a high-performance computing environment, the processor may utilize specialized AI hardware such as NVIDIA Tensor Cores or Google TPUs to accelerate inference and optimization-based body composition estimation.

The output interface may provide information concerning the estimated body composition of the patient. The output can be presented in multiple formats to ensure effective clinical interpretation. The device may generate structured reports summarizing the estimated volumes of muscle, subcutaneous fat, and visceral fat, highlighting any significant deviations from normal ranges. These reports may be exported in standardized formats such as HL7 CDA (Clinical Document Architecture) or FHIR (Fast Healthcare Interoperability Resources) for integration into electronic health record (EHR) systems. To enhance visualization, the device may overlay segmentation maps and topogram results on medical images, displaying color-coded annotations that highlight tissue distribution. These visualizations can be presented within an interactive graphical interface, allowing clinicians to manually review and adjust body composition estimates, view similarity scores, and filter results based on confidence thresholds. The device may also include a DICOM output module, allowing processed images to be sent back to a PACS system for further clinical evaluation. Additionally, an application programming interface (API) may be provided to facilitate interoperability with third-party medical imaging applications and AI-driven decision support systems.

The present document also proposes a computer-readable non-transient recording medium on which a software is registered to implement at least one of the above-mentioned methods, when the software is executed by a processor.

### Brief Description of Drawings

Other features, details and advantages will be shown in the following detailed description and on the figures, on which:
- Figure 1 schematically shows an example of a computer device according to the present document,
- Figure 2 illustrates a flow-chart of a generic method according to the present document,
- Figure 3 illustrates a training phase according to an embodiment of the present document,
- Figure 4 illustrates an inference phase according to an embodiment of the present document.

The annexed drawing includes meaningful colors. Although the present application is to be published in black and white, a colored version of the annexed drawing was filed before the EPO.

### Description of Embodiments

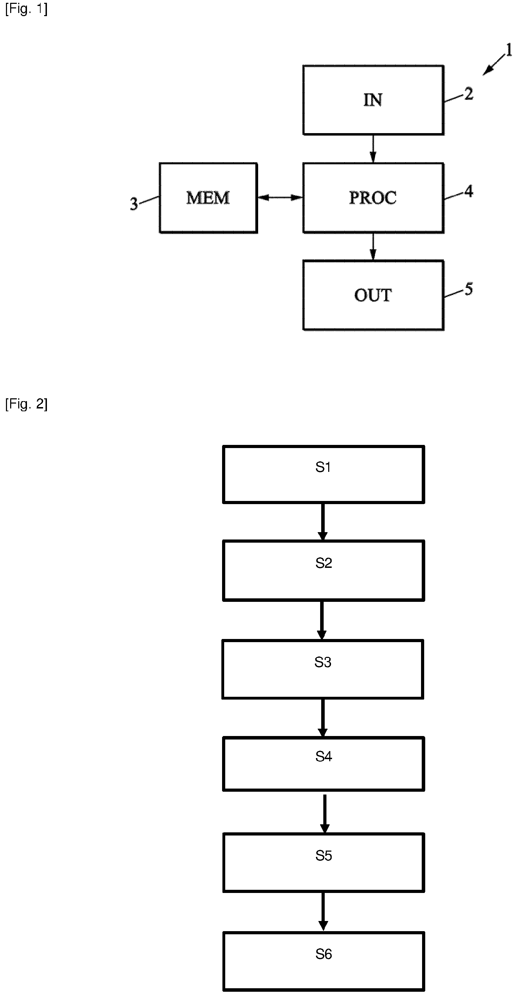

**Figure 1** schematically shows an example of a computer device 1 according to the present document.

Said computer device 1 comprises:
- an input interface 2 to receive medical images,
- a memory 3 for storing at least instructions of a computer program according to the preceding claim,
- a processor 4 accessing the memory for reading the aforesaid instructions and executing then the method according to the present document,
- an output interface 5 to provide information concerning the comparison and the characterization of the anatomical lesions.

**Figure 2** is a flow chart illustrating the computer-implemented method for estimating the body composition of a patient from a restricted-field-of-view medical image, according to the present document.

The method comprises the following steps:
- segmenting (S1) tissues present in the restricted-field-of-view medical image to identify at least one class of tissue;
- computing (S2) a topogram representing the distribution of segmented tissue areas as a function of their longitudinal position along the body of the patient, for said class;
- registering (S3) the topogram with a reference database of full-body medical images from reference patients, said registration step comprising aligning the topogram with the topograms of reference patients by maximizing a similarity criterion;
- selecting (S4) a subset of reference patients by identifying those with a similarity score above a predefined threshold;
- determining (S5), for each class of tissue, personalized extrapolation factors by computing the volumetric ratio between restricted-field-of-view volume measurements and full-body volume measurements for the selected reference patients;
- estimating (S6) the body composition of the patient by multiplying, for each class of tissue, the measured volumes of the segmented tissue in the restricted-field-of-view image by the personalized extrapolation factors.

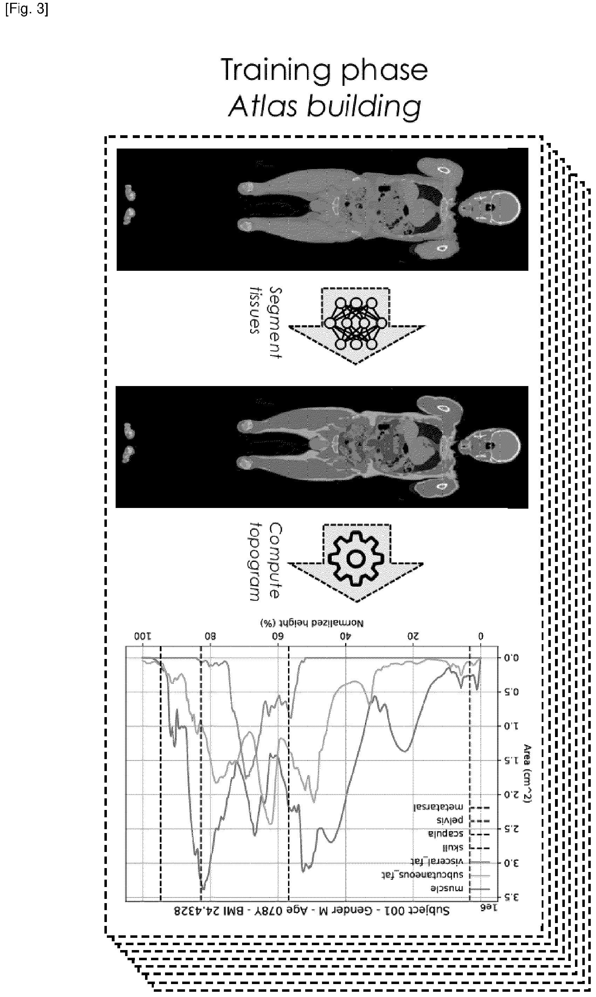

**Figure 3** illustrates a training phase, referred to as "Atlas Building," according to an embodiment of the present document. This phase involves the processing of full-body medical images from reference patients to construct an atlas of tissue distributions. Each full-body medical image, such as a CT scan, undergoes tissue segmentation. This segmentation is performed using a deep learning model, such as U-Net, which classifies and labels various tissue types, including muscle, subcutaneous fat, and visceral fat. The segmentation step generates detailed maps of tissue distributions across the entire body.

Following segmentation, a topogram is computed for each full-body image. The topogram represents the distribution of tissue areas along the longitudinal axis of the body. For each cross-sectional slice of the full-body image, the total area occupied by each tissue type is quantified and plotted against its anatomical position along the cranio-caudal axis. The resulting topograms provide a longitudinal profile of tissue distribution, capturing variations in cross-sectional areas of tissues like muscle, subcutaneous fat, and visceral fat throughout the entire body.

The topograms, derived from multiple reference patients, are stored in a reference database to form the atlas. This atlas serves as a comprehensive framework for aligning patient-specific topograms during the inference phase. The purpose of this phase is to establish a dataset that captures the variability in tissue distributions across a population. This dataset facilitates accurate alignment and extrapolation during the subsequent inference phase.

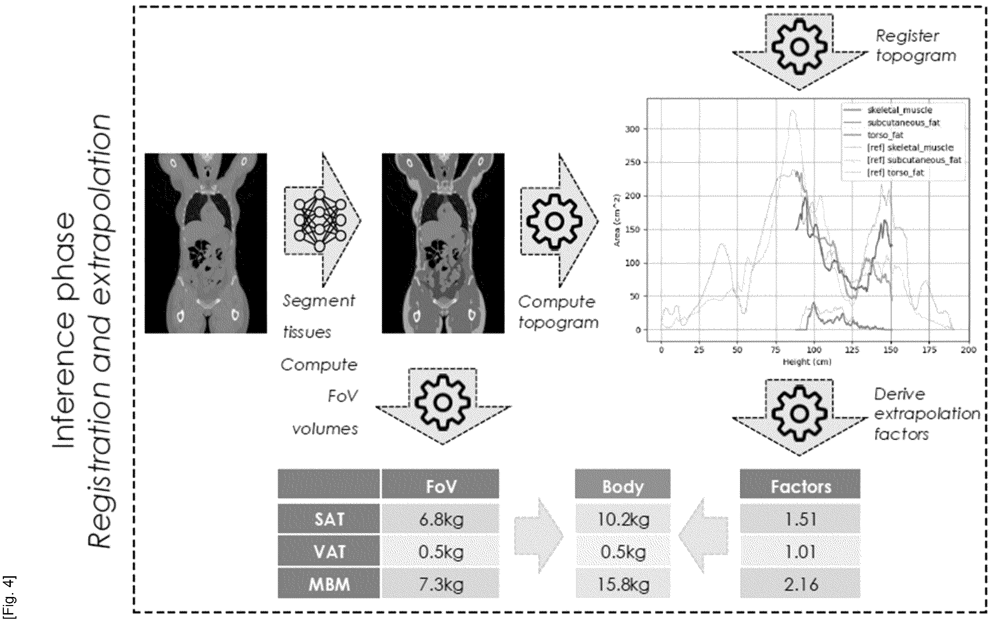

The inference phase, illustrated in **Figure 4****,** utilizes the atlas constructed during the training phase to estimate a patient's full-body composition based on a restricted-field-of-view (FoV) medical image. This phase begins with the segmentation of tissues within the restricted field of view. Using a deep learning model, such as U-Net, tissues such as muscle, subcutaneous fat, and visceral fat are classified and labeled within the restricted image, generating a detailed segmentation map.

A topogram is then computed from the segmented restricted-field-of-view image. This topogram represents the cross-sectional tissue areas as a function of their anatomical position along the body. The figure shows solid lines representing the patient-specific topogram derived from the restricted image. These curves visualize the actual tissue distribution in the scanned portion of the body.

To estimate the full-body composition, the patient-specific topogram (solid lines) is registered with the reference topograms (dashed lines) from the atlas. The reference topograms represent the longitudinal tissue distribution for full-body images of reference patients. Registration involves aligning the solid lines with the dashed lines by maximizing a similarity criterion, such as the Jaccard index, correlation coefficients, or least-square differences. This step identifies reference patients whose full-body tissue distributions most closely resemble the patient's restricted-field-of-view data.

After identifying similar reference patients, personalized extrapolation factors are computed. These factors are derived by calculating the volumetric ratio between restricted-field-of-view measurements and full-body measurements for each matched reference patient. By averaging these ratios, patient-specific scaling coefficients are generated, accounting for individual anatomical variations.

The personalized extrapolation factors are then applied to the segmented tissue volumes from the restricted field of view to estimate the patient's total body composition. For each tissue type, the measured volume within the restricted field of view is scaled using the corresponding extrapolation factor, yielding an accurate estimation of the total body volume. The results, as shown in the figure, include the estimated tissue volumes for subcutaneous fat (SAT or Subcutaneous Adipose Tissue), visceral fat (VAT or Visceral Adipose Tissue), and muscle (MBM or Muscle Body Mass), along with their extrapolated full-body equivalents. These outputs are presented in a structured format for clinical use, enabling accurate diagnosis and personalized treatment planning.

## Claims

1. A computer-implemented method for estimating the body composition of a patient from a restricted-field-of-view medical image, the method comprising:
- segmenting (S1) tissues present in the restricted-field-of-view medical image to identify at least one class of tissue;
- computing (S2) a topogram representing the distribution of segmented tissue areas as a function of their longitudinal position along the body of the patient, for said class;
- registering (S3) the topogram with a reference database of full-body medical images from reference patients, said registration step comprising aligning the topogram with the topograms of reference patients by maximizing a similarity criterion;
- selecting (S4) a subset of reference patients by identifying those with a similarity score above a predefined threshold;
- determining (S5), for each class of tissue, personalized extrapolation factors by computing the volumetric ratio between restricted-field-of-view volume measurements and full-body volume measurements for the selected reference patients;
- estimating (S6) the body composition of the patient by multiplying, for each class of tissue, the measured volumes of the segmented tissue in the restricted-field-of-view image by the personalized extrapolation factors.

2. Computer-implemented method according to the preceding claim, wherein said class of tissue comprises at least one of muscle tissue, subcutaneous fat, and visceral fat.

3. The method according to any of the preceding claims, wherein segmenting tissues is performed using a deep learning model selected from the group consisting of U-Net, V-Net, and other convolutional neural network architectures.

4. The method according to any of the preceding claims, wherein the segmenting tissues are refined using post-processing techniques including morphological operations or connected component analysis.

5. The method according to any of the preceding claims, wherein computing the topogram includes aggregating area measurements in specific slices where anatomical landmarks are visible.

6. The method according to any of the preceding claims, wherein computing the topogram includes using interpolation methods to handle missing or unevenly spaced slices or implementing smoothing functions to reduce noise in the topogram.

7. The method according to any of the preceding claims, wherein the computed topogram is normalized to facilitate alignment with reference topograms.

8. The method according to any of the preceding claims, wherein registering the topogram involves using a similarity criterion selected from the group consisting of the Jaccard index, correlation coefficients, and least-square differences.

9. The method according to any of the preceding claims, wherein registering the topogram involves applying translation and scaling transformations to optimize alignment with reference topograms.

10. The method according to any of the preceding claims, wherein registering involves determining non-linear transformations to optimize alignment with reference topograms.

11. The method according to any of the preceding claims, wherein selecting a subset of reference patients involves using dynamic thresholds for similarity scores based on validation studies or selecting a fixed percentage of reference patients with the highest similarity scores.

12. A computer program product, comprising instructions which, when executed by a processor, cause the processor to implement the method according to any of the preceding claims.

13. A computer device (1) comprising:
- an input interface (2) to receive medical images,
- a memory (3) for storing at least instructions of a computer program according to the preceding claim,
- a processor (4) accessing the memory for reading the aforesaid instructions and executing then the method according to any of the claims 1 to 11,
- an output interface (5) to provide information concerning the estimated body composition of the patient.
